# EUROPÄISCHE PATENTSCHRIFT

(11) **EP 1 503 483 B1**
(45) Veröffentlichungstag und Bekanntmachung des Hinweises auf die Patenterteilung: **24.01.2007**
(21) Anmeldenummer: 04012829.0
(22) Anmeldetag: 29.05.2004
(51) Int. Cl.: H02K 11/02

(54) **Verfahren zum Befestigen einer Entstördrossel sowie Vorrichtung beinhaltend eine solche Entstördrossel**
Method for fastening an interference suppression choke as well as a device including such choke
Procédé pour fixer une bobine d'anti-parasitage et dispositif contenant une telle bobine

(30) Priorität: 31.07.2003 DE 10335001
(43) Veröffentlichungstag der Anmeldung: 02.02.2005
(73) Patentinhaber: ROBERT BOSCH GMBH, 70442 Stuttgart (DE)
(72) Erfinder: Meyer, Christian, 76228 Karlsruhe-Wolfartsweier (DE)

(56) Entgegenhaltungen:
- DE-A1- 10 042 508
- DE-A1- 10 144 918
- DE-A1- 10 204 716
- DE-A1- 19 805 185
- FR-A- 2 833 423
- US-A- 5 610 467

## Beschreibung

### Stand der Technik

Die Erfindung betrifft ein Verfahren zum Befestigen einer Entstördrossel an einem Gehäuseteil eines Elektromotors, sowie einen Elektromotor beinhaltend eine solche Entstördrossel nach der Gattung der unabhängigen Ansprüche 1 und 9.

Mit der WO 01/19500 A1 ist ein Bauteil einer elektrischen Maschine bekannt geworden, bei dem elektrische Leiterbahnen und Bauelemente zur elektrischen Signal-Aufbereitung/Bereitstellung vom Kunststoffmaterial des Bauteils umspritzt sind. Dabei wird beispielsweise in einem ersten Herstellungsschritt eine Entstördrossel elektrisch kontaktiert und die gesamte Entstördrossel, einschließlich Kern, als Einlegeteil in ein Werkzeug eingelegt und in einem weiteren Herstellungsschritt des Bauteils mit Kunststoff umspritzt. Dadurch wird der Drosselkern, sowie der Drosseldraht einschließlich seiner Kontaktstellen vom Kunststoff umschlossen und dadurch schwingfest gehalten. Nachteilig bei einem solchen Verfahren ist die recht aufwändige Werkzeugaufnahme für die komplette Entstördrossel beim Spritzgussverfahren, sowie das hohe Risiko einer Beschädigung des Drosselkerns und/oder des Drosseldrahts durch die hohe Temperatur und den hohen Druck beim Kunststoff-Spritzgussverfahren.

Das Dokument US-A-5 610 467 offenbart einen Bürstenhalter, der eine auf einer Trägerplatte montierte Entstördrossel aufweist.

Eine weitere Möglichkeit besteht darin, eine Entstördrossel mittels Kleben oder Verklipsen mit einem Gehäuseteil zu verbinden, jedoch sind solche Verbindungsmittel ungeeignet für eine hohe Schwing- oder Temperaturbelastung.

### Vorteile der Erfindung

Das erfindungsgemäße Verfahren zur Befestigung einer Entstördrossel an einem Gehäuseteil mit den kennzeichnenden Merkmalen des Anspruchs 1 sowie der erfindungsgemäße Elektromotor mit den kennzeichnenden Merkmalen des Anspruchs 10 haben demgegenüber den Vorteil, dass durch das Umspritzten des einen axialen Endes des Drosselkerns dieser schwingfest im Gehäuseteil befestigt wird, ohne dass dieser beim Spritzguss-Verfahren beschädigt wird. Da die hohe Temperatur- und Druckbelastung beim Spritzgießen auf einen verhältnismäßig kleinen Teil des Drosselkerns beschränkt bleibt, können sich in diesen Teil des Drosselkerns eingeleitete Spannungen über den ganzen Kern verteilen. Der Drosseldraht und die Kontaktstellen an dessen Ende werden bei einem solchen erfindungsgemäßen Verfahren keinen extremen Belastungen durch das Spritzgießen ausgesetzt. Durch das Umspritzen des einen Endes des Drosselkerns, sowie der Fixierung der Enden des Drosseldrahts wird die gesamte Entstördrossel schwingungsund temperatursicher gelagert.

Ein solches Herstellungsverfahren eignet sich auch für die Verwendung von Drosselkernen aus besonders druck- und temperaturempfindlichen Sintermaterialien, wodurch die Effizienz der Entstördrossel erhöht bzw. deren Bauraum reduziert werden kann.

Ist der Drosselkern nach dem Spritzvorgang über etwa ein Achtel bis zu einem Viertel seiner Länge vom Kunststoff umschlossen, so ist einerseits ein sicherer Halt des Kerns im Kunststoffbauteil gewährleistet, andererseits hält sich der Wärme- und Spannungseintrag beim Spritzgießen in vertretbaren Grenzen, so dass eine Zerstörung des Kernmaterials verhindert wird. Ein guter Kompromiss dieser beiden Effekte ist gegeben, wenn der umspritzte Bereich des Drosselkerns in etwa einem Sechstel der gesamten Länge entspricht.

Werden die Entstörelemente direkt an einem Bürstenhalterelement angeordnet, so können die Enden des Drosseldrahts sehr einfach mit Leiterbahnen oder mit den Köchern der Kohlebürsten verbunden werden und sind dadurch in unmittelbarer Nähe des die Störung verursachenden Bürstenfeuers angeordnet.

Mittels der eingespritzten Drosselkerne können die Drosseldrähte zusammen mit anderen Bauelementen, die beispielsweise auf einem solchen Bürstenhalterelement angeordnet werden, vorteilhaft alle in einer Montagerichtung eingefügt werden, wodurch die Anzahl der Prozess-Schritte reduziert wird.

Da der Drosseldraht nur lose auf den Drosselkern aufgeschoben wird und nicht fest mit demselben verbunden ist, wird der Drosseldraht bei dessen Kontaktierung nicht zusätzlich durch das Gewicht des Drosselkerns belastet. Dies erlaubt eine höhere Flexibilität bei der Fixierung der Drahtenden.

Durch die oben genannte Montageweise des Drosseldrahts können dessen Enden mit Standardverfahren, wie beispielsweise Schweißen, Löten oder Verklemmen mit den Leiterbahnen und den Kohlebürsten elektrisch verbunden werden. Günstig ist es, beim Spritzgießen eine topfförmige Ausnehmung an das Gehäuseteil anzuformen, die die Entstördrossel zu deren Führung und/oder Schutz zumindest teilweise aufnimmt.

### Zeichnung

Mehrere Ausführungsbeispiele der Erfindung sind in der Zeichnung vereinfacht dargestellt und in der nachfolgenden Beschreibung näher erläutert.

Es zeigen
- Figur 1: schematisch eine perspektivische Ansicht eines Bürstenhalterelements, hergestellt nach einem erfindungsgemäßen Befestigungsverfahren der Entstördrosseln,
- Figur 2: einen schematischen Schnitt durch einen Ausschnitt eines Gehäuseteils mit einem darin befestigten Drosselkern nach dem ersten Verfahrensschritt und
- Figur 3: eine entsprechende Schnittdarstellung eines weiteren Ausführungsbeispiels nach dem zweiten Verfahrensschritt.

### Beschreibung der Ausführungsbeispiele

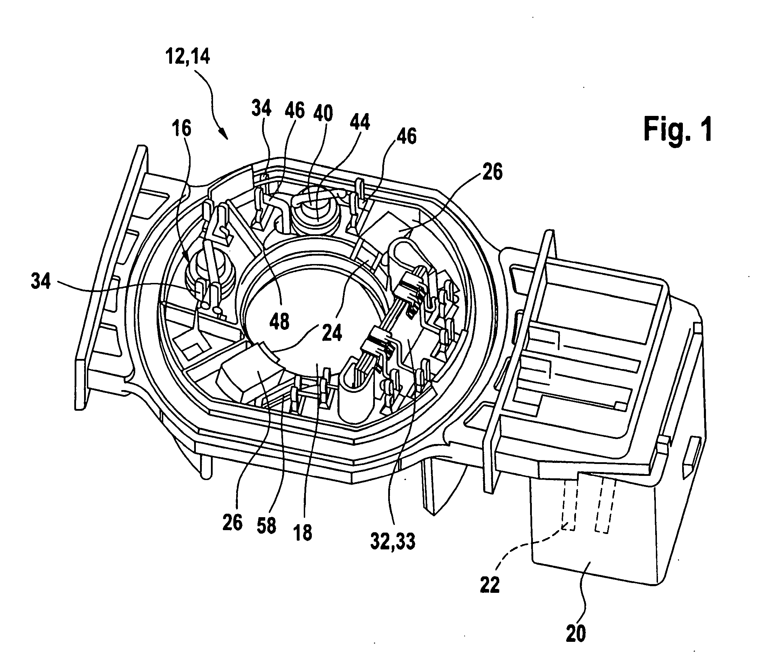

In Figur 1 ist als Gehäuseteil 12 ein Bürstenhalterelement 14 eines Elektromotors 10 dargestellt, auf dem Entstördrosseln 16 nach dem erfindungsgemäßen Verfahren befestigt sind. Das Bürstenhalterelement 14 weist einen bekannten Grundaufbau in Form einer im Wesentlichen flachen Grundplatte mit einer mittleren Aussparung 18, sowie einem integral gebildeten elektrischen Steckeranschluss 20 mit einer Vielzahl von elektrischen Kontakten 22 auf. Auf dem Bürstenhalterelement 14 sind zwei in etwa 180 Grad einander gegenüberliegende Bürsten 24 angeordnet, welche jeweils in Köcher 26 aufgenommen sind. In bekannter Weise ist in montiertem Zustand des Bürstenhalterelements 14 eine Ankerwelle 28 durch die mittlere Aussparung 18 hindurchgeführt, wobei die Bürsten 24 dann in Kontakt mit einem auf der Ankerwelle 28 angeordneten Kommutator 30 stehen. Das Bürstenhalterelement 14 ist aus einem isolierenden Material, im Ausführungsbeispiel Kunststoff, mittels Spritzgießen hergestellt. Neben der Hauptfunktion des Bürstenhalterelements 14, nämlich dem Halten der Bürsten 24, sind am Bürstenhalterelement 14 zusätzlich integral gebildete Befestigungsanordnungen zur Befestigung weiterer Bauteile 32 vorgesehen. Hierfür sind im Bürstenträgerelement 14 in figur 1 nicht sichtbare Leiterbahnen 37 angeordnet, die als Anschlusslitzen 34 aus dem Kunststoff herausragen. Die Leiterbahnen 37 stellen beispielsweise einen elektrischen Kontakt 38 zwischen den Anschlusslitzen 34 und den Bürsten 24 oder den Kontaktelementen 22 des Steckeranschlusses 20 her. An die Anschlusslitze 34 sind die Entstördrosseln 16, sowie die anderen Bauteile 32, wie beispielsweise verschiedenartige Sensoren 33 - insbesondere Temperatur-Sensoren 33 - oder beispielsweise auch die Anschlüsse der Bürsten 24, angeschlossen. In einer weiteren Variation eines Bürstenhalterelements 14 kann auf diesem auch eine Leiterplatte 36 angeordnet werden, die dann ebenfalls über entsprechende Kontakte 39 mit den Leiterbahnen 37 verbunden ist. Dabei werden im Ausführungsbeispiel alle Bauteile 32 von einer Seite bestückt und elektrisch kontaktiert, einschließlich der Entstördrosseln 16. Die Entstördrosseln 16 bestehen aus einem im Wesentlichen zylinderförmigen Drosselkern 40 aus magnetisierbarem Material, beispielsweise Ferrit, das mittels eines Sinterverfahrens geformt wird. Der Drosselkern 40 ist an seinem unteren axialen Ende 42 vom Kunststoff des Bürstenhalterelements 14 umspritzt und dadurch fest im Bürstenhalterelement 14 fixiert. Um den Eisenkern 40 ist ein spulenförmig aufgewickelter Drosseldraht 44 angeordnet, der mit seinen beiden Enden 46 an den Anschlusslitzen 34 befestigt ist. Die Entstördrossel 16 ist innerhalb einer topfförmigen Ausformung 48 des Bürstenhalterelements 14 angeordnet, an dessen Bodenfläche 50 der Drosselkern 40 umspritzt ist.

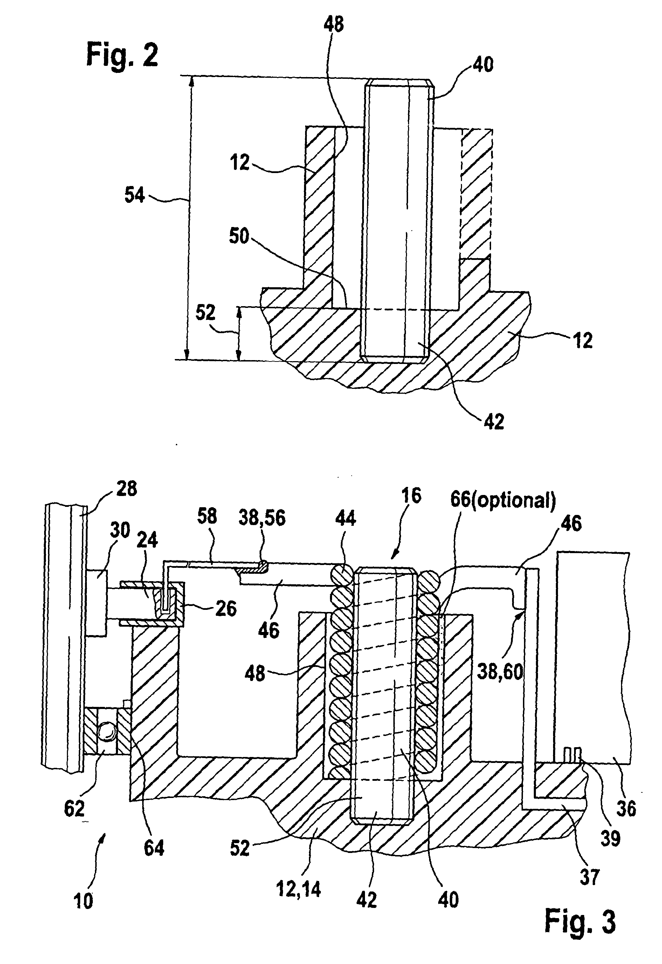

In Figur 2 ist ein Ausschnitt eines Gehäuseteils 12 nach dem ersten Verfahrensschritt dargestellt. Der Drosselkern 40 wird durch eine Werkzeugaufnahme während des Einspritzvorgangs bei der Herstellung des Gehäuseteils 12 gehalten und dabei am unteren axialen Ende 42 mit dem Gehäuseteil 12 verbunden. Der umspritzte Bereich 52 entspricht dabei in etwa einem Achtel bis zu einem Viertel der Gesamtlänge 54 des Drosselkerns 40. In diesem Ausführungsbeispiel ist der Drosselkern 40 näherungsweise über ein Sechstel seiner Gesamtlänge 54 vom Kunststoff des Gehäuseteils 12 umspritzt. Radial beabstandet zum Drosselkern 40 ist eine topfförmige Wandung 48 angeformt, die in einer Variation den Drosselkern 40 nur über einen Teil seines Umfangs umschließt. Der Abstand zwischen der topfförmigen Wandung 48 und dem Drosselkern 40 ist derart gewählt, dass in einem zweiten Verfahrensschritt der spulenförmige Drosseldraht 44 axial auf den Drosselkern 40 geschoben werden kann.

Das Ergebnis des zweiten Verfahrensschritts ist in einer Variation des Ausführungsbeispiels in Figur 3 dargestellt. Der Drosseldraht 44 wird lose aufgeschoben und weist keine Verbindung zum Drosselkern 40 auf. Die beiden Enden 46 des Drosseldrahts 44 ragen aus der topffönnigen Ausformung 48 heraus und sind sowohl mechanisch, als auch elektrisch an Kontaktstellen 38 mit den Leiterbahnen 37 verbunden. Ein Ende 46 ist beispielsweise mittels einer Lötverbindung 56 mit einem Leiter 58 verbunden, der an der Bürste 24 angeschlossen ist, die in einem Köcher 26 angeordnet ist. Die Bürste 24 befindet sich in Kontakt mit dem Kommutator 30, der auf der Ankerwelle 28 des Elektromotors 10 angeordnet ist. Das andere Ende 46 des Drosseldrahts 44 ist beispielsweise über eine Schweißverbindung 60 mit einer Leiterbahn 37 verbunden, die den elektrischen Kontakt zum Steckeranschluss 20 herstellt. Die Lötverbindung 56 und die Schweißverbindung 60, sowie die Klemmverbindung mit den Anschlusslitzen 34 stellen einerseits die elektrische Verbindung zu den Leiterbahnen 37 und/oder Leitern 58 dar, andererseits sichern sie den Drosseldraht 44 auch mechanisch gegen ein Verschieben desselben. Das Bürstenhalterelement 14 in Figur 3 trägt des weiteren eine Leiterplatte 62, die von der gleichen Montagerichtung bestückt wird, wie die Entstördrossel 16 und die Köcher 26 mit den Bürsten 24. Des weiteren weist das Bürstenhalterelement 14 eine Lageraufnahme 64 auf, in die ein auf der Ankerwelle 28 angeordnetes Lager 62, beispielsweise ein Kugel- oder Kalottenlager, eingefügt ist.

In einer Variation des Ausführungsbeispiels für höhere Schwingungsbeanspruchung wird nach dem losen Aufschieben des Drosseldrahts 44 auf den Drosselkern 40 zusätzlich zu der Kontaktierung der beiden Enden 46 der Drosseldraht 44 mit Klebstoff 66 am Drosselkern 40 oder am an der topfförmigen Wandung 48 fixiert.

Es sei angemerkt, dass hinsichtlich der in allen Figuren gezeigten Ausführungsbeispiele vielfältige Kombinationsmöglichkeiten der einzelnen Merkmale untereinander möglich sind. So ist die Erfindung nicht auf die Befestigung von Entstördrosseln auf Bürstenhalterelementen 14 beschränkt, sondern ist auch auf beliebig andersartig ausgeformte Gehäuseteile 12 anzuwenden wie definiert in den beigefügten Ansprüchen. Dabei kann das Gehäuseteil 12 unterschiedliche Bauteile 32 aufnehmen, sowie der Drosseldraht 44 auf beliebige Weise elektrisch und mechanisch mit Leiterelementen 37, 58 des Gehäuseteils 12 verbunden sein. Bevorzugt findet das erfindungsgemäße Befestigungsverfahren von Entstördrosseln 16 für die Herstellung von DC-Elektromotoren 10 Anwendung, die zum Verstellen von beweglichen Teilen im Kraftfahrzeug, insbesondere von Teilen eines Schaltgetriebes, verwendet werden.

## Patentansprüche

1. Verfahren zum Befestigen einer Entstördrossel (16) an einem Gehäuseteil (12) eines Elektromotors (10), wobei die Entstördrossel (16) einen magnetischen Drosselkern (40) und einen um dessen Umfang angeordneten Drosseldraht (44) mit zwei Enden (46) aufweist, **dadurch gekennzeichnet, dass**
der Drosselkern (40) zuerst nur an einem axialen Ende (42) als Einlegeteil beim Spritzgießen des Gehäuseteils (12) in diesem befestigt wird,
und danach der Drosseldraht (44) auf den Drosselkern (40) aufgeschoben wird und die beide Enden (46) fixiert werden.

2. Verfahren nach Anspruch 1, **dadurch gekennzeichnet, dass** der Drosselkern (40) aus Ferrit-Material mittels Sintern hergestellt ist.

3. Verfahren nach einem der Ansprüche 1 oder 2, **dadurch gekennzeichnet, dass** der Drosselkern (40) zu einem Viertel bis zu einem Achtel - vorzugsweise in etwa einem Sechstel- seiner Länge (54) mit dem Gehäuseteil (12) umspritzt wird.

4. Verfahren nach einem der Ansprüche 1 bis 3, **dadurch gekennzeichnet, dass** das Gehäuseteil (12) als Bürstenhalterelement (14) ausgebildet ist, an dem Aufnahmen (26) für Kohlebürsten (24) angeordnet sind, die mit einem auf einer Ankerwelle (28) befestigten Kommutator (30) zusammenwirken.

5. Verfahren nach einem der Ansprüche 1 bis 4, **dadurch gekennzeichnet, dass** das Bürstenhalterelement (14) bei der Montage komplett von einer Seite - insbesondere mit den Entstördrosseln (16), den Aufnahmen (26), einer Leiterplatte (36) oder mit Sensoren (32) - bestückt werden kann.

6. Verfahren nach einem der Ansprüche 1 bis 5, **dadurch gekennzeichnet, dass** der Drosseldraht (44) vorgebogen und lose auf dem Drosselkern (40) angeordnet wird und nur an seinen Enden (46) fixiert wird.

7. Verfahren nach einem der Ansprüche 1 bis 6, **dadurch gekennzeichnet, dass** die Enden (46) des Drosseldrahts (44) mittels Schweißen, Löten oder Verklemmen an Kontaktstellen 38 kontaktiert werden.

8. Verfahren nach einem der Ansprüche 1 bis 7, **dadurch gekennzeichnet, dass** das Bürstenhalterelement (14) eine topfförmige Wandung (48) aufweist, die die Entstördrossel (16) zumindest teilweise umschließt.

9. Verfahren nach einem der Ansprüche 1 bis 8, **dadurch gekennzeichnet, dass** der Drosseldraht (44) am Drosselkern (40) und/oder an der Wandung (48) festgeklebt wird.

10. Elektromotor (10) mit mindestens einer an einem Gehäuseteil (12, 14) befestigten Entstördrossel (16), wobei die Entstördrossel (16) einen magnetischen Drosselkern (40) und einen um dessen Umfang angeordneten Drosseldraht (44) aufweist, insbesondere hergestellt nach einem der Ansprüche 1 bis 9, **dadurch gekennzeichnet, dass** der Drosselkern (40) nur an einem axialen Ende (42) - insbesondere über ein Achtel bis zu einem Viertel seiner Länge (54) - fest mit dem Gehäuseteil (12. 14) umspritzt ist.

11. Elektromotor (10) nach Anspruch 10, **dadurch gekennzeichnet, dass** der Drosseldraht (44) spulenförmig lose auf dem Drosselkern (40) angeordnet ist und nur an seinen Enden (46) fixiert ist.

12. Elektromotor (10) nach Anspruch 10, **dadurch gekennzeichnet, dass** der Drosseldraht (44) mittels Kleben fixiert ist.

## Claims

1. Method for fastening an interference suppression choke (16) to a housing part (12) of an electric motor (10), the interference suppression choke (16) having a magnetic choke core (40) and a choke wire (44), which has two ends and is arranged around the circumference of the said core, **characterized in that** the choke core (40) is first fastened only at one axial end (42) in the housing part (12) as an insert part during the injection-moulding of the said housing part, and after that the choke wire (44) is pushed onto the choke core (40) and the two ends (46) are fixed.

2. Method according to Claim 1, **characterized in that** the choke core (40) is produced from ferrite material by means of sintering.

3. Method according to either of Claims 1 and 2, **characterized in that** the choke core (40) is encapsulated with the housing part (12) over one quarter to one eighth - preferably approximately one sixth - of its length (54).

4. Method according to one of Claims 1 to 3, **characterized in that** the housing part (12) is formed as a brush holder element (14), arranged on which are receptacles (26) for carbon brushes (24), which interact with a commutator (30) fastened on an armature shaft (28).

5. Method according to one of Claims 1 to 4, **characterized in that**, during assembly, the brush holder element (14) can be completely equipped from one side - in particular with the interference suppression chokes (16), the receptacles (26), a printed circuit board (36) or with sensors (32).

6. Method according to one of Claims 1 to 5, **characterized in that** the choke wire (44) is arranged in pre-bent form loosely on the choke core (40) and is fixed only at its ends (46).

7. Method according to one of Claims 1 to 6, **characterized in that** the ends (46) of the choke wire (44) are contacted at contact points (38) by means of welding, soldering or clamping.

8. Method according to one of Claims 1 to 7, **characterized in that** the brush holder element (14) has a pot-shaped wall (48), which at least partially encloses the interference suppression choke (16).

9. Method according to one of Claims 1 to 8, **characterized in that** the choke wire (44) is adhesively fixed to the choke core (40) and/or to the wall (48).

10. Electric motor (10) with at least one interference suppression choke (16) fastened to a housing part (12, 14), the interference suppression choke (16) having a magnetic choke core (40) and a choke wire (44) arranged around the circumference of the said core, in particular produced in a manner according to one of Claims 1 to 9, **characterized in that** the choke core (40) is firmly encapsulated by the housing part (12, 14) only at its axial end (42) - in particular over one eighth to one quarter of its length (54).

11. Electric motor (10) according to Claim 10, **characterized in that** the choke wire (44) is arranged in coil form loosely on the choke core (40) and is fixed only at its ends (46).

12. Electric motor (10) according to Claim 10, **characterized in that** the choke wire (44) is fixed by means of adhesive bonding.

## Revendications

1. Procédé pour fixer une bobine d'antiparasitage (16) sur une partie de boîtier (12) d'un moteur électrique (10), la bobine d'antiparasitage (16) comprenant un noyau de bobine (40) et un fil de bobine (44) avec deux extrémités (46) disposé autour de la périphérie de celui-ci, **caractérisé en ce que**
le noyau de bobine (40) n'est d'abord fixé que par une extrémité axiale (42) comme pièce d'insertion dans la partie de boîtier (12) lors du moulage par injection de celle-ci, et le fil de bobine (44) est ensuite glissé sur le noyau de bobine (40) puis les deux extrémités (46) sont fixées.

2. Procédé selon la revendication 1,
**caractérisé en ce que**
le noyau de bobine (40) est constitué d'une matière de ferrite par frittage.

3. Procédé selon l'une des revendications 1 ou 2,
**caractérisé en ce que**
le noyau de bobine (40) est enrobé par projection sur un quart à un huitième - de préférence sur environ un sixième - de sa longueur (54) avec la partie de boîtier (12).

4. Procédé selon l'une des revendications 1 à 3,
**caractérisé en ce que**
la partie de boîtier (12) est un élément porte-balais (14), sur lequel sont formés des logements (26) pour des balais (24), qui coopèrent avec un collecteur (30) fixé sur un arbre d'induit (28).

5. Procédé selon l'une des revendications 1 à 4,
**caractérisé en ce que**
l'élément porte-balais (14), lors du montage, est équipé complètement d'un côté- notamment avec les bobines d'antiparasitage (16), les logements (26), une plaquette de circuits imprimés (36) ou avec des capteurs (32)-.

6. Procédé selon l'une des revendications 1 à 5,
**caractérisé en ce que**
le fil de bobine (44) est précintré et posé librement sur le noyau de bobine (40), il n'est fixé qu'à ses extrémités (46).

7. Procédé selon l'une des revendications 1 à 6,
**caractérisé en ce que**
les extrémités (46) du fil de bobine (44) sont raccordées par soudage, brasage ou serrage à des points de contact (38).

8. Procédé selon l'une des revendications 1 à 7,
**caractérisé en ce que**
l'élément porte-balais (14) présente une paroi en forme de pot (48), qui entoure au moins partiellement la bobine d'antiparasitage (16).

9. Procédé selon l'une des revendications 1 à 8,
**caractérisé en ce que**
le fil de bobine (44) est collé sur le noyau de bobine (40) et/ou sur la paroi (48).

10. Moteur électrique (10) avec au moins une bobine d'antiparasitage (16) fixée à une partie de boîtier (12, 14), la bobine d'antiparasitage (16) comprenant un noyau de bobine (40) et un fil de bobine (44) disposé autour de la périphérie de celui-ci, fabriqué notamment selon l'une des revendications 1 à 9,
**caractérisé en ce que**
le noyau de bobine (40) n'est fixé à la partie de boîtier (12, 14) qu'à une extrémité axiale (42) par injection par surmoulage - notamment sur un huitième à un quart de sa longueur (54) - .

11. Moteur électrique selon la revendication 10,
**caractérisé en ce que**
le fil de bobine (44) est bobiné librement sur le noyau de bobine (40) et n'est fixé qu'à ses extrémités (46).

12. Moteur électrique (10) selon la revendication 10,
**caractérisé en ce que**
le fil de bobine (44) est fixé par collage.
